# EUROPÄISCHE PATENTSCHRIFT

(11) **EP 2 628 121 B1**
(45) Veröffentlichungstag und Bekanntmachung des Hinweises auf die Patenterteilung: **28.01.2015**
(21) Anmeldenummer: 11805467.5
(22) Anmeldetag: 15.12.2011
(51) Int. Cl.: G06F 21/00

(54) **VORRICHTUNG UND VERFAHREN ZUM SCHUTZ EINES SICHERHEITSMODULS GEGEN MANIPULATIONSVERSUCHE IN EINEM FELDGERÄT**
DEVICE AND METHOD FOR PROTECTING A SECURITY MODULE FROM MANIPULATION ATTEMPTS IN A FIELD DEVICE
DISPOSITIF ET PROCÉDÉ POUR PROTÉGER UN MODULE DE SÉCURITÉ DES TENTATIVES DE MANIPULATION FRAUDULEUSE DANS UN APPAREIL DE TERRAIN

(30) Priorität: 14.01.2011 DE 102011002706
(43) Veröffentlichungstag der Anmeldung: 21.08.2013
(73) Patentinhaber: Siemens Aktiengesellschaft, 80333 München (DE)
(72) Erfinder: FALK, Rainer, 85586 Poing (DE); FRIES, Steffen, 85598 Baldham (DE)
(86) Internationale Anmeldenummer: PCT/EP2011/072904
(87) Internationale Veröffentlichungsnummer: WO 2012/095237

(56) Entgegenhaltungen:
- DE-A1-102006 014 133
- US-A1- 2007 255 966
- US-A1- 2008 222 430
- US-A1- 2009 106 563
- US-A1- 2010 242 088

## Beschreibung

Die vorliegende Erfindung bezieht sich auf eine Vorrichtung und ein Verfahren zum Schutz eines Sicherheitsmoduls gegen Manipulationsversuche, insbesondere in Feldgeräten mit Tamper-Schutz.

### Stand der Technik

Industrielle Feldgeräte wie beispielsweise Steuergeräte für Bahn- und Gleisanlagen, für die Steuerung von Verkehrsampeln oder von Verkehrswechselanzeigen oder zur Überwachung von Pipelines befinden sich meist in öffentlich zugänglichen oder durch den Betreiber schwer überwachbaren Gebieten, so dass es prinzipiell nicht ausgeschlossen werden kann, dass sich Unbefugte Zugang zu einem Feldgerät verschaffen und Manipulationsversuche daran vornehmen können. In diesem Zusammenhang wird bei unbefugten Eingriffen und Manipulationen auch von einem "Tampering" gesprochen.

Da Feldgeräte über eine integrierte Sicherheitsfunktionalität verfügen, mit der beispielsweise die externe Kommunikation mit Leitzentralen oder Rechenzentren kryptographisch abgesichert wird, ist es notwendig, entsprechende sicherheitsrelevante Daten, welche das Feldgerät für ein ordnungsgemäßes Funktionieren benötigt, gegen ein Tampering hinreichend zu schützen.

Für das Speichern von sicherheitsrelevanten Daten wie beispielsweise kryptographischen Kommunikationsschlüsseln eignen sich grundsätzlich speziell für diese Funktion vorgesehene Sicherheitschips, beispielsweise Sicherheits-ICs, die sowohl die Schlüsseldaten sicher speichern als auch notwendige kryptographische Berechnungen mit den Schlüsseldaten chipintern durchführen. Der Sicherheitschip selbst ist dabei meist tamper-geschützt, das heißt, in einer geeigneten manipulationsgeschützten Umgebung eingebettet.

Derartige Sicherheitschips können allerdings nicht mit externen Tamper-Sensoren oder Manipulationssensoren versehen werden, mit denen Manipulationsversuche außerhalb der manipulationsgeschützten Umgebung, in die der Chip selbst eingebettet ist, erfasst werden können. Auch für solche Manipulationsversuche ist es jedoch wünschenswert, die Geheimhaltung der sicherheitsrelevanten Daten auf dem Sicherheitschip gewährleisten zu können.

Im Falle eines Manipulationsversuchs an dem Feldgerät ist für die Einleitung von Sicherheitsmaßnahmen bislang die Recheneinheit oder Steuereinrichtung des Feldgeräts verantwortlich. Dazu muss die Steuereinrichtung in einem aktiven Betriebsmodus sein. Häufig ist die Steuereinrichtung jedoch inaktiv geschaltet oder im Falle einer Manipulation sogar nicht betriebsfähig oder nicht mit ausreichend Strom versorgt.

Die Druckschrift US 2007/0255966 A1 offenbart eine kryptographische Schaltung mit einem sicheren Datenspeicher und einer Systemfunktionseinheit, welche auf den Datenspeicher zugreift.

Die Druckschrift DE 10 2006 014 133 A1 offenbart eine Vorrichtung mit einem Datenspeicher, der von einer physikalischen Schutzeinheit umgeben ist, einer Löscheinheit, und einer Zugangseinheit, welche einen externen Zugriff auf den Datenspeicher ermöglicht.

Die Druckschrift US 2009/0106563 A1 offenbart ein System, das in einem Speicher gespeicherte Daten gegenüber Manipulationen schützt.

Die Druckschrift US 2008/0222430 A1 offenbart ein manipulationsgeschütztes System mit einem Steuergerät und einem siche ren Datenspeicher, welcher durch Manipulationsschaltungen geschützt ist.

Es besteht daher ein Bedarf an Lösungen, mithilfe derer geeignete Sicherheitsmaßnahmen zur Sicherstellung der Geheimhaltung sicherheitsrelevanter Daten in einem Sicherheitschip eines Feldgeräts zuverlässig, effizient und schnell eingeleitet werden können, wenn Manipulationsversuche an dem Feldgerät vorgenommen werden.

### Zusammenfassung der Erfindung

Eine Idee der vorliegenden Erfindung ist es, eine Zwischenschnittstelle zwischen einer Steuereinrichtung eines Feldgeräts und einem herkömmlichen Sicherheitsmodul vorzusehen, die den Austausch von sicherheitsrelevanten Daten zwischen der Steuereinrichtung und dem Sicherheitsmodul überwacht und bei Manipulationsversuchen an dem Feldgerät selbstständig notwendige Maßnahmen zur Geheimhaltung der sicherheitsrelevanten Daten einleiten kann. Die Zwischenschnittstelle emuliert sowohl für die Steuereinrichtung als auch für das Sicherheitsmodul einen herkömmlichen Kommunikationspartner, so dass keine Änderungen an den bestehenden Kommunikationsprotokollen notwendig sind.

Eine Ausführungsform der vorliegenden Erfindung nach Anspruch 1 besteht daher in einer Vorrichtung zum Schutz eines Sicherheitsmoduls gegen Manipulationsversuche in einem Feldgerät, mit einer Steuereinrichtung, welche dazu ausgelegt ist, das Feldgerät zu steuern, einem Sicherheitsmodul, welches dazu ausgelegt ist, kryptographische Schlüsseldaten zur Verwendung durch die Steuereinrichtung bereitzuhalten, und einer Schnittstelleneinrichtung, welche zwischen die Steuereinrichtung und das Sicherheitsmodul verbunden ist und eine Kommunikation zwischen der Steuereinrichtung und dem Sicherheitsmodul ermöglicht, und welche dazu ausgelegt ist, der Steuereinrichtung den Zugriff auf die in dem Sicherheitsmodul bereitgehaltenen kryptographischen Schlüsseldaten zu ermöglichen und bei einem Manipulationsversuch an dem Feldgerät den Zugriff auf die kryptographischen Schlüsseldaten zu unterbinden. Dies bietet den Vorteil, Feldgeräte mit herkömmlichen Sicherheitsmodulen auf effiziente und kostengünstige Weise ausstatten zu können, ohne bestehende Komponenten des Feldgeräts verändern zu müssen.

Gemäß einer bevorzugten Ausführungsform umfasst die Vorrichtung Manipulationssensoren, welcher mit der Schnittstelleneinrichtung verbunden sind, und welche dazu ausgelegt sind, Manipulationsversuche an dem Feldgerät oder einer manipulationsgeschützten Umgebung des Sicherheitsmoduls zu erfassen und der Schnittstelleneinrichtung anzuzeigen. Damit kann die Schnittstelleneinrichtung selbsttätig und ohne Unterstützung der Steuereinrichtung geeignete Sicherheitsmaßnahmen bei Manipulationsversuchen initiieren. Insbesondere im inaktiven Zustand der Steuereinrichtung können damit schnell und zuverlässig Sicherheitsmaßnahmen zur Sicherung der kryptographischen Schlüsseldaten eingeleitet werden.

Vorzugsweise ist die Schnittstelleneinrichtung ein Hardwaremodul, beispielsweise ein programmierbarer Logikbaustein. Dies bietet den Vorteil, dass die Schnittstelleneinrichtung kompakt, kostengünstig und funktionsgerecht zweckgebunden ausgestaltet werden kann

Gemäß einer vorteilhaften Ausführungsform umfasst die Vorrichtung weiterhin eine Stromversorgungseinrichtung, welche mit der Schnittstelleneinrichtung verbunden ist, und welche dazu ausgelegt ist, die Schnittstelleneinrichtung zumindest temporär mit Strom zu versorgen. Dies hat den Vorteil, dass bei erfassten Manipulationsversuchen nicht erst die Steuereinrichtung aktiviert werden muss, um Sicherheitsmaßnahmen einzuleiten. Besonders vorteilhaft ist es, wenn auch im Falle der Unterbrechung anderweitiger Stromversorgungen des Feldgeräts und/oder der Steuereinrichtung die Schnittstelleneinrichtung zumindest so lange mit Strom versorgt bleibt, bis geeignete Sicherungsmaßnahmen zur Geheimhaltung der kryptographischen Schlüsseldaten in dem Sicherheitsmodul durchgeführt worden sind.

Die vorliegende Erfindung schafft weiterhin ein Verfahren nach Anspruch 8 zum Schutz eines Sicherheitsmoduls gegen Manipulationsversuche in einem Feldgerät, mit den Schritten: Senden einer Anfrage einer Steuereinrichtung in dem Feldgerät nach kryptographischen Schlüsseldaten eines Sicherheitsmoduls an eine Schnittstelleneinrichtung;
Überprüfen in der Schnittstelleneinrichtung, ob ein Manipulationsversuch an dem Feldgerät erfasst worden ist; Übertragen der kryptographischen Schlüsseldaten des Sicherheitsmoduls an die Steuereinrichtung durch die Schnittstelleneinrichtung, falls kein Manipulationsversuch erfasst worden ist; und
Unterbinden des Übertragens der kryptographischen Schlüsseldaten des Sicherheitsmoduls an die Steuereinrichtung durch die Schnittstelleneinrichtung, falls ein Manipulationsversuch erfasst worden ist.
Vorteilhafterweise erfolgt überdies ein Löschen der kryptographischen Schlüsseldaten in dem Sicherheitsmodul durch die Schnittstelleneinrichtung, falls ein Manipulationsversuch erfasst worden ist. Auf diese Art kann vorteilhafterweise ein Auslesen von kryptographischen Schlüsseldaten in dem Sicherheitsmodul durch Unbefugte unmöglich gemacht werden, falls es zu einer Manipulation an dem Feldgerät gekommen ist.

Gemäß einer Ausführungsform wird ein Authentisieren der Steuereinrichtung gegenüber dem Sicherheitsmodul oder eine Kommunikation der Steuereinrichtung mit dem Sicherheitsmodul durch die Schnittstelleneinrichtung verhindert bzw. gesperrt. Damit kann verhindert werden, dass ein möglicherweise unbefugter Zugriff auf die kryptographischen Schlüsseldaten erfolgen kann, falls ein Manipulationsverdacht vorliegt.

Die Erfindung schafft weiterhin ein Feldgerät nach Anspruch 15 mit einer erfindungsgemäßen Vorrichtung zum Schutz eines Sicherheitsmoduls gegen Manipulationsversuche.

Weitere Modifikationen und Variationen ergeben sich aus den Merkmalen der abhängigen Ansprüche.

### Kurze Beschreibung der Figuren

Verschiedene Ausführungsformen und Ausgestaltungen der vorliegenden Erfindung werden nun in Bezug auf die beiliegenden Zeichnungen genauer beschrieben, in denen
- Fig. 1: eine schematische Darstellung eines Feldgeräts mit einer Vorrichtung zum Schutz eines Sicherheitsmoduls gemäß einer Ausführungsform der Erfindung;
- Fig. 2: eine schematische Darstellung eines Feldgeräts mit einer Vorrichtung zum Schutz eines Sicherheitsmoduls gemäß einer weiteren Ausführungsform der Erfindung;
- Fig. 3: ein Schema eines Verfahrens zur Kommunikation mit einer Vorrichtung zum Schutz eines Sicherheitsmoduls gemäß einer weiteren Ausführungsform der Erfindung; und
- Fig. 4: eine schematische Darstellung eines Verfahrens zum Schutz eines Sicherheitsmoduls gemäß einer weiteren Ausführungsform der Erfindung zeigt.

Die beschriebenen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt. Gleiche Bezugszeichen bezeichnen dabei gleiche oder ähnlich wirkende Komponenten.

### Ausführliche Beschreibung der Erfindung

Im Folgenden können Manipulationssensoren im Sinne dieser Beschreibung alle Erfassungseinrichtungen umfassen, welche physikalische Eingriffe an dem überwachten Gerät erkennen und entsprechende Anzeigesignale an die zugeordneten Rechen- oder Steuereinrichtungen übermitteln können. Beispielsweise können derartige Erfassungseinrichtungen über Licht, Ionenstrahlen, Temperatur, Druck, elektrischen Widerstand, elektrische Spannung oder ähnliche physikalische Effekte Änderungen des Normzustandes erkennen, welche mit einem Tamper-Eingriff bzw. einer Manipulation des überwachten Geräts einhergehen. Manipulationssensoren im Sinne dieser Beschreibung können daher beispielsweise Schalter, Tamperfolien (z.B. ein sogenanntes "Wire Mesh" bzw. eine Sicherheitsleitgitterfolie), Lichtschranken, kapazitive Anordnungen, lichtempfindliche Sensorflächen oder ähnliche Einrichtungen umfassen. Es sollte klar sein, dass auch weitere Erfassungseinrichtungen mit ähnlicher Funktionalität Manipulationssensoren im Sinne dieser Beschreibung darstellen können.

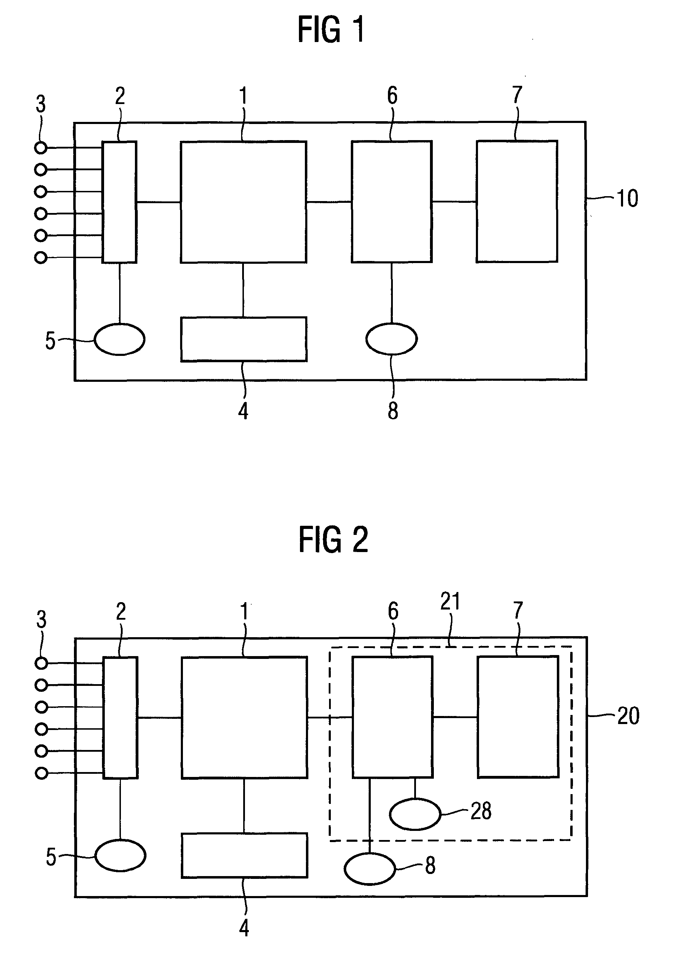

Fig. 1 zeigt eine schematische Darstellung eines Feldgeräts 10 mit einer Vorrichtung zum Schutz eines Sicherheitsmoduls 7. Das Feldgerät 10 kann beispielsweise ein Steuergerät für eine Bahn- oder Gleisanlage sein, zum Beispiel für eine Weiche, eine Schranke oder ein Signal. Das Feldgerät 10 kann jedoch jedes andere entfernt gelegene Gerät sein, wie beispielsweise eine Pipelineüberwachungsvorrichtung, eine Wetterstation oder eine Ampel. Das Feldgerät 10 umfasst eine Steuereinrichtung 1, die zum Einen funktionelle Aufgaben des Feldgeräts 10 und zum Anderen Kommunikationsvorgänge innerhalb des Feldgeräts 10 oder mit der Außenwelt steuern kann. Eine Eingabe-/Ausgabeeinrichtung 2 kann dazu vorgesehen sein, die Steuereinrichtung 1 beispielsweise mit einer zentralen Station wie einer Leitzentrale oder einem Rechenzentrum zu verbinden. Über die Eingabe-/Ausgabeeinrichtung 2 kann das Feldgerät 10 mit der Außenwelt unter Verwendung kryptographischen Schlüssel kommunizieren.

Daten mit kryptographischem Schutz können beispielsweise über entsprechende Verschlüsselung mithilfe der Eingabe-/Ausgabeeinrichtung 2 versandt und empfangen werden. Zur Verschlüsselung kann jede bekannte Verschlüsselungstechnik wie beispielsweise IPsec, SSL/TLS, MACsec, L2TP, PPTP, PGP, S/MIME oder eine ähnliche Technik mit einem dazugehörigen Schlüsselmanagement, wie z.B. IKE, EAP oder anderer Verfahren eingesetzt werden. Hierzu umfasst das Feldgerät 10 Kommunikationsanschlüsse 3, welche die Eingabe-/Ausgabeeinrichtung 2 mit der Außenwelt verbinden.

An die Eingabe-/Ausgabeeinrichtung 2 kann beispielsweise ein Manipulationssensor 5 angeschlossen sein, der Manipulationsversuche oder unbefugte Eingriffe an dem Feldgerät 10 erfassen bzw. erkennen kann. Der Manipulationssensor 5 übermittelt im Falle eines erfassten Manipulationsversuchs über die Eingabe-/Ausgabeeinrichtung 2 ein entsprechendes Signal an die Steuereinrichtung 1, die daraufhin entsprechende Sicherungsmaßnahmen ergreifen kann.

Das Feldgerät 10 kann weiterhin eine Speichereinrichtung 4 umfassen, die mit der Steuereinrichtung 1 verbunden ist. Die Speichereinrichtung 4 kann beispielsweise ein Speicherbaustein sein, in welchem dauerhaft und wiederbeschreibbar Konfigurationseinstellungen des Feldgeräts 10 gespeichert werden können, beispielsweise ein serielles EEPROM, ein Flash-Speicher oder eine vergleichbare Speichereinrichtung.

Das Feldgerät 10 umfasst weiterhin ein Sicherheitsmodul 7, auf welchem sicherheitsrelevante Daten wie beispielsweise kryptographische Schlüsseldaten zur Verwendung durch die Steuereinrichtung 1 abgelegt sein können. Das Sicherheitsmodul 7 kann beispielsweise eine integrierte Schaltung sein, die über einen passiven Tamper-Schutz verfügt, zum Beispiel eine Passivierungsschicht oder Manipulationssensoren auf dem Sicherheitsmodul 7 selbst. Das Sicherheitsmodul 7 kann beispielsweise gegen Manipulationsversuche von außen durch Fehler erkennende und korrigierende Maßnahmen für Speicher und Buskommunikation, interne Datenverschlüsselung, unregelmäßige Verdrahtungsmasken oder physikalisch gesicherte Datenspeicherung gesichert sein. Als Sicherheitsmodul 7 können zum Beispiel kommerziell erhältliche, herkömmliche Sicherheitschips verwendet werden.

Das Feldgerät 10 umfasst eine Schnittstelleneinrichtung 6, welche zwischen die Steuereinrichtung 1 und das Sicherheitsmodul 7 geschaltet ist und welche eine Kommunikation zwischen der Steuereinrichtung 1 und dem Sicherheitsmodul 7 als eine Art Hardware-Firewall ermöglicht und überwacht. Die Schnittstelleneinrichtung kann beispielsweise eine integrierte Schaltung, einen programmierbaren Logikbaustein wie ein GAL (Generic Array Logic), PAL (Programmable Array Logic), CPLD (Complex Programmable Logic Device) oder FPGA (Field Programmable Gate Array), ASIC (Application Specific Integrated Circuit), oder einen Mikroprozessor umfassen. Die Schnittstelleneinrichtung 6 kann beispielsweise über eine Datenschnittstelle wie zum Beispiel USB, einen seriellen Datenbus wie I2C oder eine Chipkartenschnittstelle mit der Steuereinrichtung 1 gekoppelt sein. Das Feldgerät 10 kann weiterhin einen Manipulationssensor 8 umfassen, der an die Schnittstelleneinrichtung 6 angeschlossen ist und der Manipulationsversuche an dem Feldgerät 10 oder an Teilen des Feldgerätes 10 erkennen und entsprechende Manipulationssignale an die Schnittstelleneinrichtung 6 übergeben kann. Im Falle eines durch den Manipulationssensor 8 erkannten Manipulationsversuch kann die Schnittstelleneinrichtung 6 selbsttätig geeignete Sicherungsmaßnahmen ergreifen, um die Geheimhaltung der kryptographischen Schlüsseldaten in dem Sicherheitsmodul 7 zu gewährleisten. Es kann möglich sein, dass der Manipulationssensor 8 statt des Manipulationssensors 5 in dem Feldgerät 10 vorgesehen ist. Es kann jedoch auch möglich sein, beide Manipulationssensoren 5 und 8 in dem Feldgerät 10 anzuordnen.

Das Feldgerät 10 kann außerdem eine (nicht gezeigte) Stromversorgungseinrichtung umfassen, die die Schnittstelleneinrichtung 6 mit Strom versorgt, auch wenn das Feldgerät 10 oder die Steuereinrichtung 6 abgeschaltet, inaktiv oder von einer anderweitigen Stromversorgung dauerhaft oder temporär abgeschnitten sind. Beispielsweise kann die Stromversorgungseinrichtung eine Batterie, ein Akku, ein Doppelschichtkondensator, wie beispielsweise ein Goldcap, ein Ultracap oder ein Supercap, oder eine ähnliche Stromversorgungseinrichtung aufweisen. Die Stromversorgungseinrichtung kann dazu ausgelegt sein, die Schnittstelleneinrichtung 6 zumindest temporär mit Strom zu versorgen. Dabei kann es vorgesehen sein, die Stromversorgung der Schnittstelleneinrichtung 6 zumindest so lange zu gewährleisten, bis die Schnittstelleneinrichtung 6 im Falle eines Manipulationsversuchs geeignete Sicherungsmaßnahmen zur Geheimhaltung der sicherheitsrelevanten Daten auf dem Sicherheitsmodul 7 ergriffen oder vollendet hat. Es kann auch möglich sein, die Stromversorgungseinrichtung in der Schnittstelleneinrichtung 6 zu integrieren.

Fig. 2 zeigt eine schematische Darstellung eines Feldgeräts 20 mit einer Vorrichtung zum Schutz eines Sicherheitsmoduls 7. Das Feldgerät 20 unterscheidet sich von dem in Fig. 1 gezeigten und beschriebenen Feldgerät 10 darin, dass die Schnittstelleneinrichtung 6 und das Sicherheitsmodul 7 in einer gemeinsamen manipulationsgeschützten Umgebung 21 eingebettet sind. Die Umgebung 21 kann beispielsweise einen vollständigen oder teilweisen physikalischen Manipulationsschutz aufweisen, beispielsweise durch Verguss mit Epoxyd-Harz. Es kann weiterhin ein weiterer Manipulationssensor 28 vorgesehen sein, der innerhalb der manipulationsgeschützten Umgebung 21 angeordnet ist und eine Manipulation, beispielsweise ein Eindringen in die Vergussmasse erkennen kann. Der Manipulationssensor 28 kann beispielsweise eine spezielle Folie, ein sogenanntes "Tamper-Mesh" bzw. "Wire Mesh" umfassen. Derartige Folien umfassen Leiterbahngitter, die um zu schützende Geräte verklebt werden können. Ein Manipulationsversuch einer derartig geschützten Umgebung 21 löst Unterbrechungen und/oder Kurzschlüsse aus, die ein entsprechendes Signal erzeugen. Es sollte jedoch klar sein, dass eine Vielzahl von Ausgestaltungen für den Manipulationssensor 28 möglich ist.

Im gezeigten Beispiel des Feldgeräts 20 sind die Manipulationssensoren 5 und 8 nicht in der manipulationsgeschützten Umgebung 21 eingebettet. Es kann jedoch auch möglich sein, einen oder beide der Manipulationssensoren 5 und 8 in der manipulationsgeschützten Umgebung 21 mit einzubetten. Auch die Steuereinrichtung 1 sowie die übrigen Komponenten des Feldgeräts 20 sind nicht in der manipulationsgeschützten Umgebung 21 eingebettet. Dadurch müssen beispielsweise empfindliche Bauteile nicht vergossen werden, was die manipulationsgeschützte Umgebung 21 kompakt und kostengünstig zu realisieren macht.

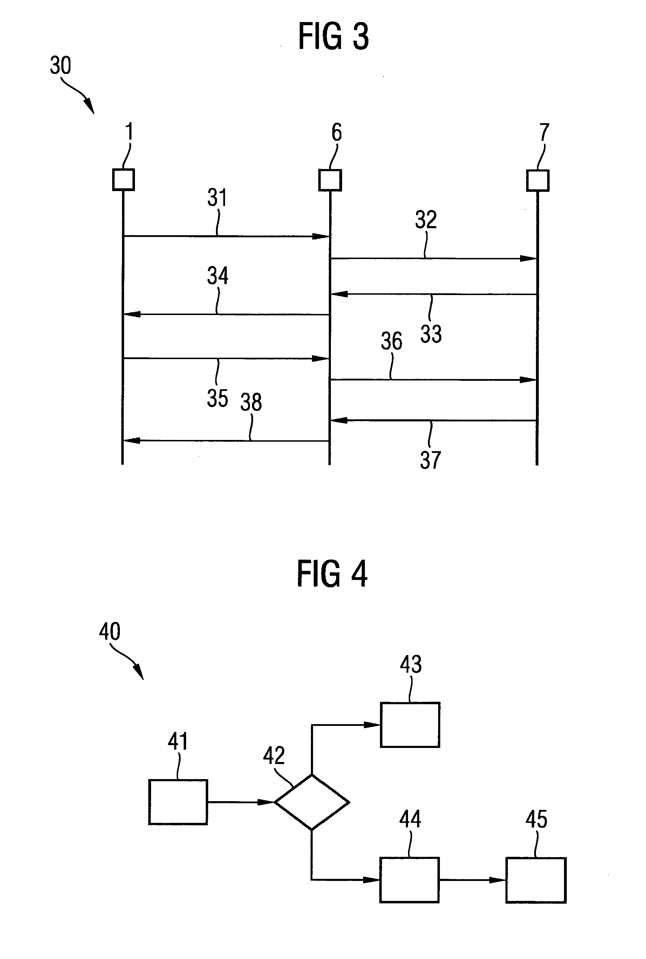

Fig. 3 zeigt ein Schema eines Verfahrens zur Kommunikation mit einer Vorrichtung zum Schutz eines Sicherheitsmoduls. Das Verfahren 30 kann dabei insbesondere von einem Feldgerät gemäß einer Ausgestaltung einer der Fig. 1 oder 2 durchgeführt werden.

In einem ersten Schritt 31 überträgt die Steuereinrichtung 1 eine Anfrage mit einer Authentisierung an die Schnittstelleneinrichtung 6. Die Authentisierung kann beispielsweise einen Aktivierungscode, eine PIN oder einen ähnlichen Inhalt aufweisen, mit dem sich die Steuereinrichtung 1 gegenüber dem Sicherheitsmodul 7 identifizieren kann. Dabei agiert die Schnittstelleneinrichtung 6 als Empfänger und emuliert somit das Sicherheitsmodul 7 gegenüber der Steuereinrichtung 1. In einem zweiten Schritt 32 gibt die Schnittstelleneinrichtung 6 die Anfrage an das Sicherheitsmodul 7 weiter, sofern kein Manipulationsversuch erfasst worden ist und die Kommunikation zwischen der Steuereinrichtung 1 und dem Sicherheitsmodul 7 als sicher eingestuft wird.

Nach einer Authentifizierung der Steuereinrichtung 1 in dem Sicherheitsmodul 7, sendet das Sicherheitsmodul 7 in einem dritten Schritt 33 eine Bestätigungsantwort an die Schnittstelleneinrichtung 6, die in einem vierten Schritt 34 an die Steuereinrichtung 1 weitergeleitet wird. Nach der Authentifizierung sendet die Steuereinrichtung 1 in einem fünften Schritt 35 einen zufälligen Wert, eine sogenannte Challenge, an die Schnittstelleneinrichtung 6, die in einem sechsten Schritt 36 von der Schnittstelleneinrichtung 6 an das Sicherheitsmodul 7 weitergeleitet wird. In dem Sicherheitsmodul 7 wird mithilfe einer kryptographischen Berechnung unter Verwendung der kryptographischen Schlüsseldaten die Challenge weiterverarbeitet, um beispielsweise einen Kommunikationsschlüssel zu erzeugen. Die Berechnung kann beispielsweise eine Verschlüsselung, eine Berechnung einer kryptographischen Prüfsumme, eine Hashwertbildung, eine Berechnung einer digitalen Signatur oder eine ähnliche Berechnung umfassen. Das Berechnungsergebnis wird in einem siebten Schritt 37 von dem Sicherheitsmodul 7 an die Schnittstelleneinrichtung 6 übertragen, die das Ergebnis in einem achten Schritt 38 an die Steuereinrichtung 1 weiterleitet. Das Berechnungsergebnis kann beispielsweise zum Aufbau kryptographisch geschützter Kommunikationsverbindungen durch die Steuereinrichtung 1 verwendet werden.

Der gezeigt Verfahrensablauf 30 gilt für den Fall, dass die Verbindung zwischen Steuereinrichtung 1 und Sicherheitsmodul 7 von der Schnittstelleneinrichtung 6 als sicher eingestuft wird, das heißt, dass kein Manipulationsversuch von der Schnittstelleneinrichtung 6 erfasst worden ist. Sobald ein solcher Manipulationsversuch zu irgendeinem Zeitpunkt während der Kommunikation zwischen der Steuereinrichtung 1 und dem Sicherheitsmodul 7 erfasst wird, kann die Schnittstelleneinrichtung 6 dazu ausgelegt sein, die Übertragung von Daten zwischen der Steuereinrichtung 1 und dem Sicherheitsmodul 7 zu unterbinden. Dabei ist es möglich, die Übertragung von Daten zwischen der Steuereinrichtung 1 und dem Sicherheitsmodul 6 vollständig zu unterbinden, oder nur die Übertragung bestimmter Daten zu unterbinden. Im letzteren Fall analysiert die Schnittstelleneinrichtung 6 bei einer erkannten Manipulation empfangene Daten und leitet sie nur dann weiter, wenn sie ein vorgegebenes Prüfkriterium erfüllen. Dadurch kann auch bei einer erkannten Manipulation eine teilweise Nutzung des Sicherheitsmoduls 7 durch die Steuereinrichtung 1 ermöglicht werden.

Fig. 4 zeigt eine schematische Darstellung eines Verfahrens 40 zum Schutz eines Sicherheitsmoduls, wie beispielsweise des Sicherheitsmoduls 7 in den Fig. 1 bis 3. In einem ersten Schritt 41 erfolgt ein Senden einer Anfrage einer Steuereinrichtung 1 eines Feldgeräts, wie beispielsweise der Feldgeräte 10 oder 20 in Fig. 1 oder 2, nach kryptographischen Schlüsseldaten des Sicherheitsmoduls 7 an die Schnittstelleneinrichtung 6. In der Schnittstelleneinrichtung 6 wird daraufhin in einem Schritt 42 überprüft, ob ein Manipulationsversuch an dem Feldgerät erfasst worden ist. Dazu kann beispielsweise ein Vorliegen eines Manipulationssignals durch einen an die Schnittstelleneinrichtung 6 angeschlossenen Manipulationssensors, wie beispielsweise der Manipulationssensoren 8 und 28 in Fig. 2, kontinuierlich überwacht werden. Sollte kein Manipulationsversuch erfasst worden sein, können kryptographische Schlüsseldaten des Sicherheitsmoduls 7 an die Steuereinrichtung 1 durch die Schnittstelleneinrichtung 6 in einem Schritt 43 gemäß des Verfahrens nach Fig. 3 übertragen werden. Sollte jedoch ein Manipulationsversuch erfasst worden sein, erfolgt in einem Schritt 44 ein Unterbinden des Übertragens der kryptographischen Schlüsseldaten des Sicherheitsmoduls 7 an die Steuereinrichtung 1 durch die Schnittstelleneinrichtung 6. Das Unterbinden kann beispielsweise dadurch erfolgen, dass die Kommunikation zwischen der Steuereinrichtung 1 und dem Sicherheitsmodul 7 durch die Schnittstelleneinrichtung 6 komplett gesperrt oder in Teilen eingeschränkt wird. Eine entsprechende Abstufung kann beispielsweise nach Schwere des Manipulationsversuchs vorgenommen werden. Es kann auch möglich sein, dass entsprechende Authentisierungscodes wie beispielsweise eine PIN nicht durch die Schnittstelleneinrichtung 6 an das Sicherheitsmodul 7 weitergeleitet werden, solange die Sicherheit der Kommunikation nicht gewährleistet ist. Es kann auch vorgesehen sein, dass die Schnittstelleneinrichtung 6 im Falle eines erfassten Manipulationsversuchs einen Sperrbefehl an das Sicherheitsmodul 7 sendet, um die Herausgabe jeglicher sicherheitsrelevanter Daten durch das Sicherheitsmodul 7 bereits durch das Sicherheitsmodul 7 selbst zu verhindern.

In einem weiteren Schritt 45 kann es auch möglich sein, dass die Schnittstelleneinrichtung 6 die kryptographischen Schlüsseldaten in dem Sicherheitsmodul 7 über einen Löschbefehl physikalisch von dem Sicherheitsmodul 7 löscht, falls ein Manipulationsversuch vorliegt. Auf diese Weise kann sichergestellt werden, dass selbst bei einem unbefugten Ausbau oder Auslesen des Sicherheitsmoduls sämtliche sicherheitsrelevanten Daten bereits vernichtet sind.

Es kann vorgesehen sein, dass die entsprechende Sicherheitsmaßnahmen je nach Schwere oder Einstufung eines möglichen Manipulationsversuchs bereits als Notmaßnahmen in der Schnittstelleneinrichtung 6 vorab gespeichert sind, so dass im Falle eines Manipulationsversuchs sämtliche Sicherungsmaßnahmen unverzüglich eingeleitet werden können. Die Schnittstelleneinrichtung 6 kann dadurch sehr schnell auf einen Manipulationsversuch reagieren. Insbesondere wenn die Schnittstelleneinrichtung 6 von einer Stromversorgungseinrichtung zumindest temporär ständig versorgt werden kann, ist es nicht nötig, zunächst auf eine Aktivierung der Steuereinrichtung 1 warten zu müssen, um Sicherungsmaßnahmen zu initiieren. Auch bei einem Ausfall der Steuereinrichtung 1 durch beispielsweise mangelnde Stromversorgung oder Zerstörung der Steuereinrichtung 1 können sämtliche Sicherungsmaßnahmen autonom von der Schnittstelleneinrichtung 6 vorgenommen werden.

## Patentansprüche

1. Vorrichtung zum Schutz eines Sicherheitsmoduls (7) gegen Manipulationsversuche in einem Feldgerät (10; 20), mit:
einer Steuereinrichtung (1), welche dazu ausgelegt ist,
das Feldgerät (10; 20) zu steuern; und
einem Sicherheitsmodul (7), welches dazu ausgelegt ist,
kryptographische Schlüsseldaten zur Verwendung durch die Steuereinrichtung (1) bereitzuhalten; **gekennzeichnet durch** einer Schnittstelleneinrichtung (6), welche zwischen die Steuereinrichtung (1) und das Sicherheitsmodul (7) geschaltet ist und eine Kommunikation zwischen der Steuereinrichtung (1) und dem Sicherheitsmodul (7) ermöglicht,
und welche dazu ausgelegt ist, der Steuereinrichtung (1) den Zugriff auf die in dem Sicherheitsmodul (7) bereitgehaltenen kryptographischen Schlüsseldaten zu ermöglichen und bei einem Manipulationsversuch an dem Feldgerät (10; 20) den Zugriff auf die kryptographischen Schlüsseldaten zu unterbinden.

2. Vorrichtung nach Anspruch 1, weiterhin mit:
einem ersten Manipulationssensor (8), welcher mit der Schnittstelleneinrichtung (6) verbunden ist, und welcher dazu ausgelegt ist, Manipulationsversuche an dem Feldgerät (10; 20) zu erfassen und der Schnittstelleneinrichtung (6) anzuzeigen.

3. Vorrichtung nach Anspruch 1 oder 2, wobei das Sicherheitsmodul (7) und die Schnittstelleneinrichtung (6) in einer manipulationsgeschützten Umgebung (21) eingebettet sind.

4. Vorrichtung nach Anspruch 3, weiterhin mit:
einem zweiten Manipulationssensor (28), welcher mit der Schnittstelleneinrichtung (6) verbunden ist, welcher in der manipulationsgeschützten Umgebung (21) eingebettet ist, und welcher dazu ausgelegt ist, Manipulationsversuche an der manipulationsgeschützten Umgebung (21) zu erfassen und der Schnittstelleneinrichtung (6) anzuzeigen.

5. Vorrichtung nach einem der vorhergehenden Ansprüche, weiterhin mit:
einer Eingabe-/Ausgabeeinrichtung (2), welche mit der Steuereinrichtung (1) verbunden ist, und welche dazu ausgelegt ist, eine externe Kommunikation der Steuereinrichtung (1) bereitzustellen;
einem dritten Manipulationssensor (5), welcher mit der Eingabe-/Ausgabeeinrichtung (2) verbunden ist, und welcher dazu ausgelegt ist, Manipulationsversuche an dem Feldgerät (10; 20) zu erfassen und der Steuereinrichtung (1) anzuzeigen; und
einer Speichereinrichtung (4), welche mit der Steuereinrichtung (1) verbunden ist, und welche dazu ausgelegt ist, in der Steuereinrichtung (1) verwendete Daten zu speichern.

6. Vorrichtung nach einem der vorhergehenden Ansprüche, wobei die Schnittstelleneinrichtung (6) ein programmierbarer Logikbaustein ist.

7. Vorrichtung nach einem der vorhergehenden Ansprüche, weiterhin mit:
einer Stromversorgungseinrichtung, welche mit der Schnittstelleneinrichtung (6) verbunden ist, und welche dazu ausgelegt ist, die Schnittstelleneinrichtung (6) zumindest temporär mit Strom zu versorgen.

8. Verfahren zum Schutz eines Sicherheitsmoduls (7) gegen Manipulationsversuche in einem Feldgerät (10; 20), mit den Schritten:
Senden einer Anfrage einer Steuereinrichtung (1) in dem Feldgerät (10; 20) nach kryptographischen Schlüsseldaten eines Sicherheitsmoduls (7) an eine Schnittstelleneinrichtung (6);
Überprüfen in der Schnittstelleneinrichtung (6), ob ein Manipulationsversuch an dem Feldgerät (10; 20) erfasst worden ist;
Übertragen der kryptographischen Schlüsseldaten des Sicherheitsmoduls (7) an die Steuereinrichtung (1) durch die Schnittstelleneinrichtung (6), falls kein Manipulationsversuch erfasst worden ist; und
Unterbinden des Übertragens der kryptographischen Schlüsseldaten des Sicherheitsmoduls (7) an die Steuereinrichtung (1) durch die Schnittstelleneinrichtung (6), falls ein Manipulationsversuch erfasst worden ist.

9. Verfahren nach Anspruch 8, weiterhin mit dem Schritt:
Löschen der kryptographischen Schlüsseldaten in dem Sicherheitsmodul (7) durch die Schnittstelleneinrichtung (6), falls ein Manipulationsversuch erfasst worden ist.

10. Verfahren nach Anspruch 8 oder 9, wobei das Senden der Anfrage ein Authentisieren der Steuereinrichtung (1) gegenüber dem Sicherheitsmodul (7) umfasst.

11. Verfahren nach Anspruch 10, wobei das Unterbinden des Übertragens ein Verhindern des Authentisierens der Steuereinrichtung (1) gegenüber dem Sicherheitsmodul (7) durch die Schnittstelleneinrichtung (6) umfasst.

12. Verfahren nach einem der Ansprüche 8 bis 11, wobei das Unterbinden des Übertragens ein Sperren der Kommunikation der Steuereinrichtung (1) mit dem Sicherheitsmodul (7) durch die Schnittstelleneinrichtung (6) umfasst.

13. Verfahren nach einem der Ansprüche 8 bis 12, wobei das Überprüfen in der Schnittstelleneinrichtung (6), ob ein Manipulationsversuch an dem Feldgerät (10; 20) erfasst worden ist, ein Auswerten eines mit der Schnittstelleneinrichtung (6) verbundenen Manipulationssensors (8; 28) umfasst.

14. Verfahren nach einem der Ansprüche 8 bis 13, weiterhin mit dem Schritt:
zumindest temporäres Versorgen der Schnittstelleneinrichtung (6) mit Strom durch eine Stromversorgungseinrichtung, wenn die Stromversorgung der Steuereinrichtung (1) und/oder des Feldgeräts (10; 20) unterbrochen ist oder die Steuereinrichtung (1) inaktiv geschaltet ist.

15. Feldgerät (10; 20) mit einer Vorrichtung nach einem der Ansprüche 1 bis 7.

## Claims

1. Device for protecting a security module (7) from manipulation attempts in a field device (10; 20), comprising:
a controller (1) which is configured for controlling the field device (10; 20); and
a security module (7) which is configured for making cryptographic key data available for use by the controller (1); **characterised by**
an interface unit (6) which is connected between the controller (1) and the security module (7) and enables communication between the controller (1) and the security module (7), and which is configured for enabling the controller (1) to access the cryptographic key data made available in the security module (7) and for preventing access to the cryptographic key data if a manipulation attempt is carried out on the field device (10; 20).

2. Device according to claim 1, further comprising:
a first manipulation sensor (8) which is connected to the interface unit (6) and which is configured for detecting manipulation attempts on the field device (10; 20) and
for indicating same to the interface unit (6).

3. Device according to claim 1 or 2, wherein the security module (7) and the interface unit (6) are embedded in a manipulation-protected environment (21).

4. Device according to claim 3, further comprising:
a second manipulation sensor (28) which is connected to the interface unit (6), which is embedded in the manipulation-protected environment (21), and which is configured for detecting manipulation attempts on the manipulation-protected environment (21) and for indicating same to the interface unit (6).

5. Device according to one of the preceding claims, further comprising:
an input/output unit (2) which is connected to the controller (1) and which is configured for providing an external communication of the controller (1);
a third manipulation sensor (5) which is connected to the input/output unit (2) and which is configured for detecting manipulation attempts on the field device (10; 20) and for indicating same to the controller (1); and
a memory unit (4) which is connected to the controller (1) and which is configured for storing data used in the controller (1).

6. Device according to one of the preceding claims, wherein the interface unit (6) is a programmable logic device.

7. Device according to one of the preceding claims, further comprising:
a power supply unit which is connected to the interface unit (6) and which is configured for supplying the interface unit (6) at least temporarily with electric power.

8. Method for protecting a security module (7) from manipulation attempts in a field device (10; 20), comprising the steps of:
sending a request by a controller (1) in the field device (10; 20) for cryptographic key data of a security module (7) to an interface unit (6);
checking in the interface unit (6) to determine whether a manipulation attempt on the field device (10; 20) has been detected;
transmitting the cryptographic key data of the security module (7) to the controller (1) by the interface unit (6) if no manipulation attempt has been detected; and preventing the transmission of the cryptographic key data of the security module (7) to the controller (1) by the interface unit (6) if a manipulation attempt has been detected.

9. Method according to claim 8, further comprising the step of: erasing the cryptographic key data in the security module (7) by the interface unit (6) if a manipulation attempt has been detected.

10. Method according to claim 8 or 9, wherein the sending of the request includes authenticating the controller (1) to the security module (7).

11. Method according to claim 10, wherein the inhibiting of the transmission includes preventing the authentication of the controller (1) to the security module (7) by the interface unit (6).

12. Method according to one of claims 8 to 11, wherein the inhibiting of the transmission includes blocking the communication of the controller (1) with the security module (7) by the interface unit (6).

13. Method according to one of claims 8 to 12, wherein the check carried out in the interface unit (6) to determine whether a manipulation attempt on the field device (10; 20) has been detected includes evaluating a manipulation sensor (8; 28) connected to the interface unit (6).

14. Method according to one of claims 8 to 13, further comprising the step of:
at least temporarily supplying the interface unit (6) with electric power by means of a power supply unit if the power supply of the controller (1) and/or of the field device (10; 20) has been interrupted or the controller (1) has been switched to the inactive state.

15. Field device (10; 20) having a device according to one of claims 1 to 7.

## Revendications

1. Dispositif pour protéger un module de sécurité (7) contre des tentatives de manipulation dans un appareil de terrain (10 ; 20), avec :
un dispositif de commande (1), qui est conçu pour commander l'appareil de terrain (10 ; 20) ; et
un module de sécurité (7), qui est conçu pour préparer des données cryptographiques de clé destinées à être utilisées par le dispositif de commande (1) ; **caractérisé par**
un dispositif d'interface (6), qui est commuté entre le dispositif de commande (1) et le module de sécurité (7) et permet une communication entre le dispositif de commande (1) et le module de sécurité (7), et qui est conçu pour permettre au dispositif de commande (1) l'accès aux données cryptographiques de clé préparées dans le module de sécurité (7) et, dans le cas d'une tentative de manipulation à l'égard de l'appareil de terrain (10 ; 20), interdire l'accès aux données cryptographiques de clé.

2. Dispositif selon la revendication 1, avec en outre :
un premier capteur de manipulation (8), qui est relié au dispositif d'interface (6), et qui est conçu pour détecter des tentatives de manipulation à l'égard de l'appareil de terrain (10 ; 20) et les indiquer au dispositif d'interface (6).

3. Dispositif selon la revendication 1 ou 2, dans lequel le module de sécurité (7) et le dispositif d'interface (6) sont intégrés dans un environnement (21) protégé des manipulations.

4. Dispositif selon la revendication 3, avec en outre :
un second capteur de manipulation (28), qui est relié au dispositif d'interface (6), qui est intégré dans l'environnement (21) protégé des manipulations, et qui est conçu pour détecter des tentatives de manipulation à l'égard de l'environnement (21) protégé des manipulations et les indiquer au dispositif d'interface (6).

5. Dispositif selon l'une quelconque des revendications précédentes, avec en outre :
un dispositif d'entrée/sortie (2), qui est relié au dispositif de commande (1), et qui est conçu pour fournir une communication externe au dispositif de commande (1) ;
un troisième capteur de manipulation (5), qui est relié au dispositif d'entrée/sortie (2) et qui est conçu pour détecter des tentatives de manipulation à l'égard de l'appareil de terrain (10 ; 20) et les indiquer au dispositif de commande (1) ; et
un dispositif de mémorisation (4), qui est relié au dispositif de commande (1), et qui est conçu pour mémoriser des données utilisées dans le dispositif de commande (1).

6. Dispositif selon l'une quelconque des revendications précédentes, dans lequel le dispositif d'interface (6) est un composant logique programmable.

7. Dispositif selon l'une quelconque des revendications précédentes, avec en outre :
un dispositif d'alimentation en courant électrique, qui est relié au dispositif d'interface (6), et qui est conçu pour alimenter au moins temporairement en courant le dispositif d'interface (6).

8. Procédé pour protéger un module de sécurité (7) contre des tentatives de manipulation dans un appareil de terrain (10 ; 20), comprenant les étapes suivantes consistant à :
envoyer une demande, émanant d'un dispositif de commande (1) de l'appareil de terrain (10 ; 20), de données cryptographiques de clé d'un module de sécurité (7) à un dispositif d'interface (6);
vérifier dans le dispositif d'interface (6) si une tentative de manipulation a été détectée à l'égard de l'appareil de terrain (10 ; 20) ;
transférer les données cryptographiques de clé du module de sécurité (7) vers le dispositif de commande (1) grâce au dispositif d'interface (6), dans le cas où aucune tentative de manipulation n'a été détectée ; et
interdire le transfert des données cryptographiques de clé du module de sécurité (7) vers le dispositif de commande (1) grâce au dispositif d'interface (6), dans le cas où une tentative de manipulation a été détectée.

9. Procédé selon la revendication 8, comprenant en outre l'étape consistant à :
supprimer les données cryptographiques de clé dans le module de sécurité (7) grâce au dispositif d'interface (6), dans le cas où une tentative de manipulation a été détectée.

10. Procédé selon la revendication 8 ou 9, dans lequel l'envoi de la demande comprend une authentification du dispositif de commande (1) envers le module de sécurité (7).

11. Procédé selon la revendication 10, dans lequel l'interdiction du transfert comprend une entrave à l'authentification du dispositif de commande (1) envers le module de sécurité (7) grâce au dispositif d'interface (6).

12. Procédé selon l'une quelconque des revendications 8 à 11, dans lequel l'interdiction du transfert comprend un verrouillage de la communication entre le dispositif de commande (1) et le module de sécurité (7) grâce au dispositif d'interface (6).

13. Procédé selon l'une quelconque des revendications 8 à 12, dans lequel l'étape consistant à vérifier dans le dispositif d'interface (6) si une tentative de manipulation à l'égard de l'appareil de terrain (10 ; 20) a été détectée comprend une évaluation d'un capteur de manipulation (8 ; 28) relié au dispositif d'interface (6).

14. Procédé selon l'une quelconque des revendications 8 à 13, comprenant en outre l'étape consistant à :
alimenter en courant électrique le dispositif d'interface (6) de manière au moins temporaire grâce à un dispositif d'alimentation en courant lorsque l'alimentation en courant du dispositif de commande (1) et/ou de l'appareil de terrain (10 ; 20) est interrompue ou le dispositif de commande (1) est rendu inactif.

15. Appareil de terrain (10 ; 20) avec un dispositif selon l'une quelconque des revendications 1 à 7.
